# EUROPEAN PATENT SPECIFICATION

(11) **EP 3 217 114 B1**
(45) Date of publication and mention of the grant of the patent: **25.09.2019**
(21) Application number: 16199470.2
(22) Date of filing: 18.11.2016
(51) Int. Cl.: F24H 9/20, F24D 19/10, G05D 23/00, G05D 7/00

(54) **METHOD AND CONTROLLER FOR OPERATING A BOILER APPLIANCE**
VERFAHREN UND STEUERGERÄT ZUM BETRIEB EINER KESSELVORRICHTUNG
PROCÉDÉ ET APPAREIL DE COMMANDE POUR FAIRE FONCTIONNER UN APPAREIL À CHAUDIÈRE

(30) Priority: 10.03.2016 EP 16159718
(43) Date of publication of application: 13.09.2017
(73) Proprietor: Honeywell Technologies Sarl, 1180 Rolle (CH)
(72) Inventor: Corti, Umberto, 23848 Valmadrera (LC) (IT); Spelzini, Marco, 23851 Galbiate (LC) (IT); Conti, Massimo, 20871 Vimercate (MB) (IT)
(74) Representative: Sturm, Christoph

(56) References cited:
- EP-A1- 0 304 775
- EP-A1- 2 784 402
- WO-A1-2009/157630
- US-A1- 2005 071 049
- US-A1- 2010 116 223

## Description

The present patent application relates to a method and to a controller for operating a boiler appliance.

Boiler appliances known from the prior art comprise a combustion chamber for combusting a combustible, especially for combusting a gas/air mixture, within the combustion chamber. Such boiler appliances further comprise a heat exchanger positioned within the combustion chamber, wherein thermal energy resulting from the combustion of the combustible within the combustion chamber is used to heat water flowing through the heat exchanger. The water flow through the heat exchanger is provided by a pump, wherein the pump, namely a motor of the pump, is driven by a control variable provided by a controller, especially by a PWM input signal which is used to energize the motor. The pump, namely the motor of the pump, provides a feedback signal, especially a PWM feedback signal, being indicative about the water flow rate provided by the pump to the controller to provide a closed loop control of the pump. A temperature sensor measures the temperature of the water heated within the heat exchanger.

It should be noted that the feedback signal provided by the motor of the pump is merely indicative about the water flow rate provided by the pump. Said feed-back signal is not a signal about a measured flow rate, it is only providing information that the motor of the pump is driven by the control variable so that the motor of the pump is consuming electrical power, e.g. that the motor of the pump is energized to rotate an impeller of the pump.

If e.g. the impeller of the pump is damaged or broken, the pump does not provide a water flow rate although the motor is energized. If e.g. the impeller of the pump is damaged or broken, the motor consumes electrical power and the feedback signal of the pump motor indicates that the pump would provide a certain flow rate. However, in fact the pump would not provide the certain water flow rate because of the damaged or broken impeller.

Further, the feedback signal provided by the motor of the pump is not accurate and reliable and depends from temperature conditions. Further, the feedback signal provided by the motor of the pump is not proportional with the water flow rate.

So, the feedback signal provided by the motor of the pump provides information that the motor of the pump is consuming electrical power and is therefore indicative about a water flow rate provided by the pump. However, said feedback signal is not accurate and reliable enough.

To avoid damages of the boiler appliance, namely of the heat exchanger, it is important to ensure that a sufficient water flow rate is pumped through the heat exchanger by the pump. In boiler appliances known from the prior art, a water pressure switch or a water pressure sensor is used to measure the water flow rate through the heat exchanger. Such a water pressure sensor is used according to the prior art because, as explained above, the feedback signal provided by the motor of the pump is not accurate and reliable enough for control purposes.

DE 103 12 667 A1 discloses a method for operating a boiler appliance making use of a signal provided by a water pressure switch or a water pressure sensor.

Other prior art is disclosed by WO 2009/157630 A1, by US 2010/116223 A1, by EP 2 784 402 A1, by US 2005/071049 A1 and by EP 0 304 775 A1.

The present application provides a method for operating a boiler appliance according to claim 1.

The feedback signal provided by the motor of the pump and the temperature signal provided by the temperature sensor are both used to determine if the water flow rate through the heat exchanger is sufficient or insufficient, wherein the combustion of the combustible is allowed when a sufficient water flow rate is determined and the combustion of the combustible is not allowed when an insufficient water flow rate is determined. It is possible to remove the water pressure switch or the water pressure sensor from the boiler appliance. This results into cost savings.

Upon request of a heat demand the motor of the pump is energized and thereby started to provide the water flow rate through the heat exchanger. After the motor of the pump has been energized and thereby started, the feedback signal provided by the motor of the pump is compared with a first threshold, wherein the ignition of the combustion is only started if the feedback signal provided by the motor of the pump is above the first threshold. After the ignition of the combustion has been started, the temperature signal provided by the temperature sensor is compared with a second threshold, wherein the continued combustion is only allowed if the temperature signal provided by the temperature sensor is above the second threshold.

If the feedback signal provided by the motor of the pump is above the first threshold and if the temperature signal provided by the temperature sensor is above the second threshold then a quantitative magnitude of the water flow rate pumped through the heat exchanger is sufficient, namely high enough, to allow the continued combustion in order to serve the heat demand. The invention provides a simple and reliable way to determine if a sufficient water flow rate is pumped through the heat exchanger by the pump without the need of a water pressure switch or a water pressure sensor.

If after the motor of the pump has been energized and thereby started upon request of a heat demand the feedback signal provided by the motor of the pump is below the first threshold then the speed of the pump is increased, wherein the feedback signal provided by the motor of the pump after the increase of the pump speed is again compared with the first threshold, wherein the ignition of the combustion is allowed if the feedback signal provided by the motor of the pump after the increase of the pump speed is above the first threshold, and wherein the combustion is stopped and/or the boiler appliance is transferred into an alarm mode if the feedback signal provided by the motor of the pump after the increase of the pump speed is below the first threshold.

If after the ignition has been started the temperature signal provided by the temperature sensor is below the second threshold then the feedback signal provided by the motor of the pump is compared with the first threshold, wherein the combustion is allowed if the feedback signal provided by the motor of the pump is above the first threshold, and wherein the combustion is stopped and/or the boiler appliance is transferred into an alarm mode if the feedback signal provided by the motor of the pump is below the first threshold.

If the feedback signal provided by the motor of the pump is below the first threshold and/or if the temperature signal provided by the temperature sensor is below the second threshold then a quantitative magnitude of the water flow rate pumped through the heat exchanger is insufficient, namely not high enough, to allow the combustion.

The controller for operating a boiler appliance is defined in claim 8.

Preferred developments of the invention are provided by the dependent claims and the description which follows. Exemplary embodiments are explained in more detail on the basis of the drawing, in which:
- Figure 1: shows a schematic view of a boiler appliance;
- Figure 2: shows a flow diagram illustrating the preferred method for operating a boiler appliance.

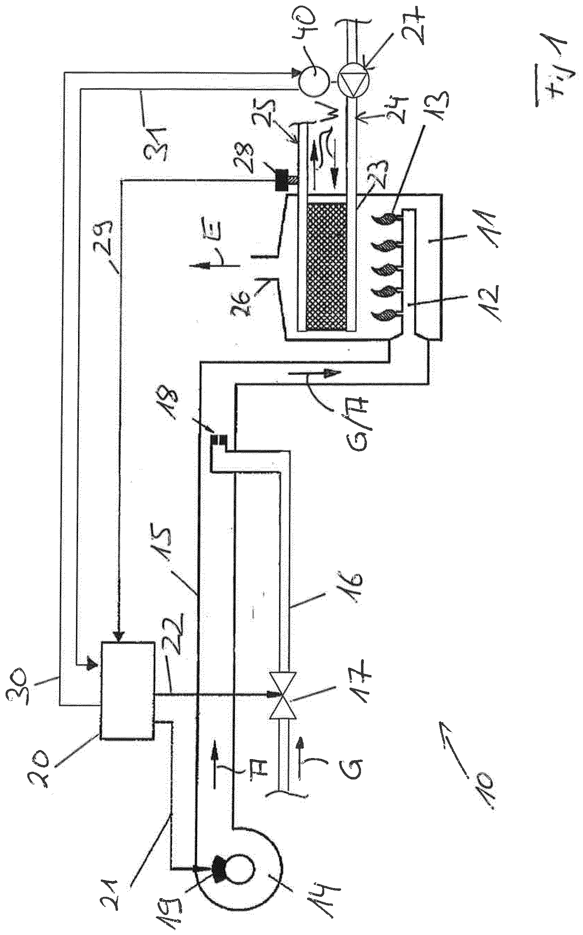

Figure 1 shows a schematic view of a boiler appliance 10. The boiler appliance 10 shown in Figure 1 is a so-called high efficiency appliance comprising a modulating fan. Such high efficiency appliances are also called premix boilers. The invention can also be used for so-called standard appliances having no modulating fan. The boiler appliance 10 comprises a combustion chamber 11 with a burner surface 12 in which combustion of a combustible, preferably combustion of a defined gas/air mixture G/A having a defined mixing ratio of gas and air, takes place during on-phases of the boiler appliance 10. The combustion results into flames 13. Exhaust Gas E resulting also from the combustion of the combustible leaves the combustion chamber 11 through a chimney 26 of the same.

The combustible, in Figure 1 the defined gas/air mixture G/A, is provided to the combustion chamber 11 by mixing an air flow A with a gas flow G. A fan 14 sucks in the air that flows through an air duct 15 and the gas that flows through a gas duct 16. A gas regulating valve 17 for adjusting the gas flow G through the gas duct 16 is assigned to the gas duct 16. The defined gas/air mixture G/A having the defined mixing ratio of gas and air is provided to the combustion chamber 11. The defined gas/air mixture g/A is provided by mixing the air flow A provided by the air duct 15 with a gas flow G provided by the gas duct 16. The air flow and the gas flow become preferably mixed by a mixing device 18. Such a mixing device 18 can be designed as a so-called Venturi nozzle.

The quantity of the air flow A and thereby the quantity of the gas/air mixture G/A flow is adjusted by the fan 14, namely by the fan speed of the fan 14. The fan speed can be adjusted and thereby modulated by a motor 19 of the fan 14. The fan speed of the fan 14 is controlled by a controller 20 generating a control variable 21 for the motor 19 of the fan 14.

The controller 20 determines the control variable 21 for motor 19 of the fan 14 and thereby the desired fan speed on basis of an actual heat demand of the boiler appliance 10. By changing and thereby modulating the fan speed of the fan 14 the load of the boiler appliance 10 can be adjusted.

The defined mixing ratio of the defined gas/air mixture is controlled by the gas regulating valve 17. The controller 20 determines a control variable 22 for the gas regulating valve 17 and thereby controls the opening/closing position of the gas regulating valve 17.

The gas regulating valve 17 is controlled by the controller 20 in such a way that the defined mixing ratio of gas and air is kept constant independent from the speed of the fan 14. So, at relative high fan speeds and at relative low fan speeds a gas/air mixture G/A having the same mixing ratio of gas and air is provided. It is also possible that the gas regulating valve 17 controls the position of the same pneumatically on basis of a pressure difference between the air pressure in the air duct 15 and the gas pressure within the gas duct 16.

A heat exchanger 23 is positioned within the combustion chamber 11. Thermal energy resulting from the combustion of the combustible within the combustion chamber 11 is used to heat water W flowing through the heat exchanger 23. The water W to be heated within the heat exchanger 23 is provided to the heat exchanger 23 through an inlet water pipe 24 and a pump 27 positioned within the inlet water pipe 24. The heated water W flows out of the heat exchanger 23 through an outlet water pipe 25.

The controller 20 generates a control variable 30 for an electrical motor 40 of the pump 27 to drive or energize the same and to provide a defined water flow rate through the heat exchanger 23 on basis of the actual heat demand. The control variable 30 is preferably provided by a PWM input signal for the motor 40 of the pump 27.

The motor 40 of the pump 27 provides a feedback signal 31 proving information that the motor 40 of the pump is consuming electrical power and thereby being indicative about the water flow rate provided by the pump 27 to the controller 20. A closed loop control for the pump 27 can be provided on basis of said feedback signal 31. The feedback signal 31 is preferably provided by a PWM feedback signal.

The feedback signal 31 provided by the motor 40 of the pump 27 is merely indicative about the water flow rate provided by the pump 27. Said feed-back signal is not a signal about a measured flow rate, it is only providing information that the motor 40 of the pump 27 is driven by the control variable so that the motor 40 of the pump 27 is consuming electrical power, e.g. that the motor 40 of the pump 27 is energized to rotate an impeller of the pump. Further, the feed-back signal 31 provided by the motor 40 of the pump 27 is not accurate and reliable and depends from temperature conditions. Further, the feedback signal 31 provided by the motor of the pump is not proportional with the water flow rate. So, the feedback signal 31 provided by the motor 40 of the pump 27 provides information that the motor 40 of the pump 27 is consuming electrical power and is therefore indicative about a water flow rate provided by the pump. However, said feedback signal 31 is not accurate and reliable enough.

A temperature sensor 28 is assigned to the outlet water pipe 25 and measures the temperature of the water heated by the heat exchanger 23. The temperature sensor 28 provides a temperature signal 29 to the controller 20.

The feedback signal 31 provided by the motor 40 of the pump 27 and the temperature signal 29 provided by the temperature sensor 28 are both used to determine a so-called quantitative magnitude of the water flow rate through the heat exchanger 23, wherein the combustion of the combustible is allowed or not allowed on basis of the determined quantitative magnitude of the water flow rate.

To avoid damages of the boiler appliance 10, namely of the heat exchanger 23, it is important to ensure that a sufficient water flow rate is pumped through the heat exchanger 23 by the pump 27.

The feedback signal 31 provided by the motor 40 of the pump 27 and the temperature signal 29 provided by the temperature sensor 28 are both used by the controller 20 to determine if a water flow rate pumped through the heat exchanger 23 is sufficient or insufficient. The combustion of the combustible is allowed if the determined water flow rate is sufficient. The combustion of the combustible is not allowed if the determined water flow rate is insufficient.

The key advantages are the following: First, insufficient water circulation can be detected before igniting the combustion in order to avoid the risk of a thermal shock to the heat exchanger 23. Second, the determination if water flow rate is sufficient or not sufficient is simple and reliable without the need of a pressure switch or a water pressure sensor. Third, the water circulation check based on feedback signal 31 is performed at the beginning of each heat demand before any ignition to minimize the thermal stress to mechanical part of the combustion chamber 11. Fourth, the method can run in background once ignition has been performed in order not to rely only on the temperature sensor 28 that could bring to false errors in case of wrong positioning of the temperature sensor 28 along the water outlet pipe 25.

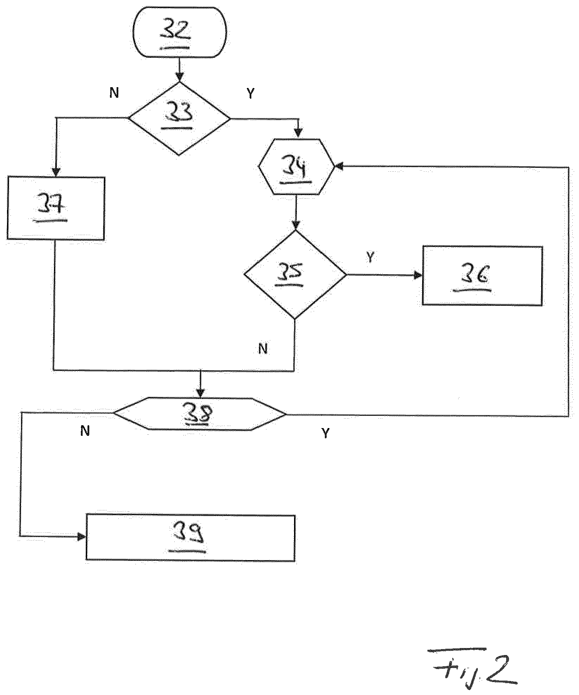

Further details of the invention will now be described referring to Figure 2. Figure 2 shows a flow diagram illustrating the method for operating a boiler appliance.

Step 32 of Figure 2 illustrates that an actual heat demand occurs and that upon request of the actual heat demand the pump 27 is started by energizing the motor 40 of the pump 27 to provide a water flow rate through the heat exchanger 23.

After the pump 27 has been started, in step 33 the feedback signal 31 provided by the motor 40 of the pump 27 is compared by the controller 20 with a first threshold. If the feedback signal 31 provided by the motor 40 of the pump 27 is above the first threshold ("path Y of step 33"), then the ignition of the combustion is started in step 34.

After ignition of the combustion has been started in step 34, then in step 35 the temperature signal 29 provided by the temperature sensor 27 is compared by the controller 20 with a second threshold. If the temperature signal 29 provided by the temperature sensor 38 is above the second threshold ("path Y of step 35"), then in step 36 the continued combustion is allowed.

If it is determined in step 33 that after the pump 27 has been started in step 32 upon request of a heat demand the feedback signal 31 provided by the motor 40 of the pump 32 is below the first threshold ("path N of step 33"), then the method branches from step 33 to step 37. In Step 37 the controller 20 increases the speed of the pump 27 for a defined period of time. Thereafter, in step 38 the controller 20 compares once more the feedback signal 31 provided by the motor 40 of the pump 27 with the first threshold.

If the controller 20 determines in step 38 that the feedback signal 31 provided by the motor 40 of the pump 27 after the increase of the pump speed is above the first threshold ("path Y of step 38"), then the method branches from step 38 to step 34 thereby allowing the ignition of the combustion. However, if the controller 20 determines in step 38 that the feedback signal 31 provided by the motor 40 of the pump 27 after the increase of the pump speed is below the first threshold ("path N of step 38"), then the method branches from step 38 to step 39. In step 39 the controller 20 transfers the boiler appliance 10 into an alarm mode. Combustion and ignition is no longer allowed. The controller 20 may generate an error message to ensure an inspection of the boiler appliance 10.

If it is determined in step 35 that after the ignition has been started in step 34 the temperature signal 39 provided by the temperature sensor 38 is below the second threshold ("path N of step 35"), then the method branches from step 35 to step 38. In step 38 the controller 20 compares once more the feedback signal 31 provided by the motor 40 of the pump 27 with the first threshold. If the controller 20 determines in step 38 that the feedback signal 31 provided by the motor 40 of the pump 27 is above the first threshold ("path Y of step 38"), then the method branches from step 38 to step 34 thereby allowing the ignition of the combustion. However, if the controller 20 determines in step 38 that the feed-back signal 31 provided by the motor 40 of the pump 27 is below the first threshold ("path N of step 38"), then the method branches from step 38 to step 39. In step 39 the controller transfers the boiler appliance an alarm mode. Combustion and ignition is no longer allowed.

In background of step 36 the controller 20 monitors the feedback signal 31 provided by the motor 40 of the pump 27 and compares the same with a first threshold. If the feedback signal 31 provided by the motor 40 of the pump 27 drops below the first threshold, it is possible to branch from step 36 to above steps 37 and 38, and steps 39 or 34 depending from the result of step 38.

The first threshold used for the comparison of the feedback signal 31 and the second threshold used for the comparison of the temperature signal 29 are independent from the magnitude of actual heat demand.

### List of reference signs

- 10: boiler appliance
- 11: burner chamber
- 12: burner surface
- 13: flame
- 14: fan
- 15: air duct
- 16: gas duct
- 17: gas valve
- 18: mixing device
- 19: motor
- 20: controller
- 21: control variable
- 22: control variable
- 23: heat exchanger
- 24: inlet water pipe
- 25: outlet water pipe
- 26: chimney
- 27: pump
- 28: temperature sensor
- 29: measurement signal
- 30: control variable
- 31: feedback signal
- 32: step
- 33: step
- 34: step
- 35: step
- 36: step
- 37: step
- 38: step
- 39: step
- 40: motor

## Claims

1. Method for operating a boiler appliance (10), the boiler appliance (10) comprising:
a combustion chamber (11) for combusting a combustible, especially for combusting a gas/air mixture within the combustion chamber(11);
a heat exchanger (23) positioned within the combustion chamber (11), wherein thermal energy resulting from the combustion of the combustible within the combustion chamber (11) is used to heat water flowing through the heat exchanger (23);
a pump (27) for pumping the water through the heat exchanger (23), wherein a motor (40) of the pump (27) is driven by a control variable (30) provided by a controller (20);
a temperature sensor (28) for measuring the temperature of the water heated by the heat exchanger (23), wherein the temperature sensor (28) provides a temperature signal (29) to the controller (22);
wherein a feedback signal (31) being indicative about a water flow rate, the water flow rate being provided by the pump (27) and the temperature signal (29) provided by the temperature sensor (28) are both used to determine if the water flow rate through the heat exchanger (23) is sufficient or insufficient, wherein the combustion of the combustible is allowed when a sufficient water flow rate is determined and the combustion of the combustible is not allowed when an insufficient water flow rate is determined;
**characterized in that**
the feedback signal (31) is provided by the motor (40) of the pump (27), wherein the feedback signal (31) provides information that the motor (40) of the pump (27) is consuming electrical power to the controller (22) and is indicative about a water flow rate provided by the pump (27);
upon request of a heat demand the motor (40) of the pump (27) is started to provide the water flow rate through the heat exchanger (23);
after the motor (40) of the pump (27) has been started the feedback signal (31) provided by the motor (40) of the pump (27) is compared with a first threshold, wherein the ignition of the combustion is only started if the feedback signal (31) provided by the motor (40) of the pump (27) is above the first threshold;
after the ignition of the combustion has been started the temperature signal (29) provided by the temperature sensor (28) is compared with a second threshold, wherein the continued combustion is only allowed if the temperature signal (29) provided by the temperature sensor (28) is above the second threshold.

2. Method as claimed in claim 1, **characterized in that** if the feedback signal (31) provided by the motor (40) of the pump (27) is above the first threshold and if the temperature signal (29) provided by the temperature sensor (28) is above the second threshold then a quantitative magnitude of the water flow rate pumped through the heat exchanger (23) is sufficient, namely high enough, to allow the continued combustion in order to serve the heat demand.

3. Method as claimed in claim 1 or 2, **characterized in that** during the continued combustion the feedback signal (31) provided by the motor (40) of the pump (27) is compared with a first threshold.

4. Method as claimed in one of claims 1 to 3, **characterized in that** if after the motor (40) of the pump (27) has been started upon request of a heat demand the feedback signal (31) provided by the motor (40) of the pump (27) is below the first threshold then the speed of the motor (40) of the pump (27) is increased, wherein
the feedback signal (31) provided by the motor (40) of the pump (27) after the increase of the pump speed is compared with the first threshold,
the ignition of the combustion is allowed if the feedback signal (31) provided by the motor (40) of the pump (27) after the increase of the pump speed is above the first threshold,
the combustion is stopped and/or the boiler appliance is transferred into an alarm mode if the feedback signal (31) provided by the motor (40) of the pump (27) after the increase of the pump speed is below the first threshold.

5. Method as claimed in one of claims 1 to 4, **characterized in that** if after the ignition has been started the temperature signal (29) provided by the temperature sensor (28) is below the second threshold then the feedback signal (31) provided by the motor (40) of the pump (27) is compared with the first threshold, wherein
the combustion is continued if the feedback signal (31) provided by the motor (40) of the pump (27) is above the first threshold,
the combustion is stopped and/or the boiler appliance is transferred into an alarm mode if the feedback signal (31) provided by the motor (40) of the pump (27) is below the first threshold.

6. Method as claimed in one of claims 1 to 5, **characterized in that** if the feedback signal (31) provided by the motor (40) of the pump (27) is below the first threshold and/or if the temperature signal (29) provided by the temperature sensor (28) is below the second threshold then a quantitative magnitude of the water flow rate pumped through the heat exchanger (23) is insufficient, namely not high enough, to allow the combustion.

7. Controller (20) for operating a boiler appliance (10), the boiler appliance (10) comprising:
a combustion chamber (11) for combusting a combustible, especially for combusting a gas/air mixture within the combustion chamber (11);
a heat exchanger (23) positioned within the combustion chamber (11), wherein thermal energy resulting from the combustion of the combustible within the combustion chamber (11) is used to heat water flowing through the heat exchanger (23);
a pump (27) for pumping the water through the heat exchanger (23), wherein a motor (40) of the pump (27) is driven by a control variable (30) provided by the controller (20); and
a temperature sensor (28) for measuring the temperature of the water heated within the heat exchanger (23), wherein the temperature sensor (28) provides a temperature signal (29) to the controller (22);
wherein the controller (20) uses a feedback signal (31) being indicative about a water flow rate, the water flow rate being provided by the pump (27) and the temperature signal (29) provided by the temperature sensor (28) to determine if the water flow rate through the heat exchanger (23) is sufficient or insufficient, wherein the controller (20) allows the combustion of the combustible when the determined water flow rate through the heat exchanger (23) is sufficient and inhibits the combustion of the combustible when the determined water flow rate through the heat exchanger (23) is insufficient;
**characterized in that**
the motor (40) of the pump (27) provides the feedback signal (31), wherein the feedback signal (31) provides information that the motor (40) of the pump (27) is consuming electrical power to the controller (22) and is indicative about a water flow rate provided by the pump (27);
the controller (20) is configured to execute the method of any one of claims 1-6 in the boiler appliance (10).

## Patentansprüche

1. Verfahren zum Betrieb einer Kesselvorrichtung (10), wobei die Kesselvorrichtung (10) umfasst:
eine Verbrennungskammer (11) zum Verbrennen eines brennbaren Materials, insbesondere zum Verbrennen einer Gas/Luft-Mischung innerhalb der Verbrennungskammer (11);
einen Wärmetauscher (23), der in der Verbrennungskammer (11) positioniert ist, wobei Wärmeenergie, die aus der Verbrennung des brennbaren Materials in der Verbrennungskammer (11) resultiert, zum Aufheizen von Wasser verwendet wird, das durch den Wärmetauscher (23) fließt;
eine Pumpe (27) zum Pumpen des Wassers durch den Wärmetauscher (23), wobei ein Motor (40) der Pumpe (27) durch eine Steuervariable (30) angetrieben wird, die von einer Steuerung (20) bereitgestellt wird;
einen Temperatursensor (28) zum Messen der Temperatur des durch den Wärmetauscher (23) aufgeheizten Wassers, wobei der Temperatursensor (28) der Steuerung (22) ein Temperatursignal (29) bereitstellt;
wobei sowohl ein Rückmeldesignal (31), das hinweisend zu einer Wasserflussrate ist, wobei die Wasserflussrate durch die Pumpe (27) bereitgestellt wird, als auch das Temperatursignal (29), das von dem Temperatursensor (28) bereitgestellt wird, verwendet werden, um zu ermitteln, ob die Wasserflussrate durch den Wärmetauscher (23) hindurch ausreichend oder unzureichend ist, wobei die Verbrennung des brennbaren Materials zugelassen ist, wenn eine ausreichende Wasserflussrate ermittelt wird, und die Verbrennung des brennbaren Materials nicht zugelassen ist, wenn eine unzureichende Wasserflussrate ermittelt wird;
**dadurch gekennzeichnet, dass**
das Rückmeldesignal (31) von dem Motor (40) der Pumpe (27) bereitgestellt wird, wobei das Rückmeldesignal (31) der Steuerung (22) Informationen, dass der Motor (40) der Pumpe (27) elektrische Leistung verbraucht, bereitstellt und hinweisend zu einer von der Pumpe (27) bereitgestellten Wasserflussrate ist;
bei Anforderung eines Wärmebedarfs der Motor (40) der Pumpe (27) gestartet wird, um die Wasserflussrate durch den Wärmetauscher (23) hindurch bereitzustellen;
nachdem der Motor (40) der Pumpe (27) gestartet worden ist, das durch den Motor (40) der Pumpe (27) bereitgestellte Rückmeldesignal (31) mit einem ersten Schwellenwert verglichen wird, wobei die Zündung der Verbrennung nur gestartet wird, falls das durch den Motor (40) der Pumpe (27) bereitgestellte Rückmeldesignal (31) oberhalb des ersten Schwellenwerts liegt;
nachdem die Zündung der Verbrennung gestartet worden ist, das durch den Temperatursensor (28) bereitgestellte Temperatursignal (29) mit einem zweiten Schwellenwert verglichen wird, wobei die fortgesetzte Verbrennung nur zugelassen ist, falls das durch den Temperatursensor (28) bereitgestellte Temperatursignal (29) oberhalb des zweiten Schwellenwerts liegt.

2. Verfahren nach Anspruch 1, **dadurch gekennzeichnet, dass,** falls das durch den Motor (40) der Pumpe (27) bereitgestellte Rückmeldesignal (31) oberhalb des ersten Schwellenwerts liegt, und falls das durch den Temperatursensor (28) bereitgestellte Temperatursignal (29) oberhalb des zweiten Schwellenwerts liegt, dann eine quantitative Größe der durch den Wärmetauscher (23) hindurch gepumpten Wasserflussrate ausreichend ist, nämlich hoch genug, um die fortgesetzte Verbrennung zuzulassen, um den Wärmebedarf zu bedienen.

3. Verfahren nach Anspruch 1 oder 2, **dadurch gekennzeichnet, dass** während der fortgesetzten Verbrennung das durch den Motor (40) der Pumpe (27) bereitgestellte Rückmeldesignal (31) mit einem ersten Schwellenwert verglichen wird.

4. Verfahren nach einem der Ansprüche 1 bis 3, **dadurch gekennzeichnet, dass,** falls das durch den Motor (40) der Pumpe (27) bereitgestellte Rückmeldesignal (31) unter dem ersten Schwellenwert liegt, nachdem der Motor (40) der Pumpe (27) nach Anforderung eines Wärmebedarfs gestartet worden ist, dann die Drehzahl des Motors (40) der Pumpe (27) erhöht wird, wobei
das durch den Motor (40) der Pumpe (27) nach dem Anstieg der Pumpendrehzahl bereitgestellte Rückmeldesignal (31) mit dem ersten Schwellenwert verglichen wird,
die Zündung der Verbrennung zugelassen ist, falls das durch den Motor (40) der Pumpe (27) nach dem Anstieg der Pumpendrehzahl bereitgestellte Rückmeldesignal (31) oberhalb des ersten Schwellenwerts liegt,
die Verbrennung gestoppt wird und/oder die Kesselvorrichtung in einen Alarmmodus versetzt wird, falls das durch den Motor (40) der Pumpe (27) nach dem Anstieg der Pumpendrehzahl bereitgestellte Rückmeldesignal (31) unterhalb des ersten Schwellenwerts liegt.

5. Verfahren nach einem der Ansprüche 1 bis 4, **dadurch gekennzeichnet, dass,** falls das durch den Temperatursensor (28) bereitgestellte Temperatursignal (29), nachdem die Zündung gestartet wurde, unterhalb des zweiten Schwellenwerts liegt, dann das durch den Motor (40) der Pumpe (27) bereitgestellte Rückmeldesignal (31) mit dem ersten Schwellenwert verglichen wird, wobei
die Verbrennung fortgesetzt wird, falls das durch den Motor (40) der Pumpe (27) bereitgestellte Rückmeldesignal (31) oberhalb des ersten Schwellenwerts liegt,
die Verbrennung gestoppt wird und/oder die Kesselvorrichtung in einen Alarmmodus versetzt wird, falls das durch den Motor (40) der Pumpe (27) bereitgestellte Rückmeldesignal (31) unterhalb des ersten Schwellenwerts liegt.

6. Verfahren nach einem der Ansprüche 1 bis 5, **dadurch gekennzeichnet, dass,** falls das durch den Motor (40) der Pumpe (27) bereitgestellte Rückmeldesignal (31) unterhalb des ersten Schwellenwerts liegt, und/oder falls das durch den Temperatursensor (28) bereitgestellte Temperatursignal (29) unterhalb des zweiten Schwellenwerts liegt, dann eine quantitative Größe der durch den Wärmetauscher (23) hindurch gepumpten Wasserflussrate unzureichend ist, nämlich nicht hoch genug, um die Verbrennung zuzulassen.

7. Steuerung (20) zum Betrieb einer Kesselvorrichtung (10), wobei die Kesselvorrichtung (10) umfasst:
eine Verbrennungskammer (11) zum Verbrennen eines brennbaren Materials, insbesondere zum Verbrennen einer Gas/Luft-Mischung innerhalb der Verbrennungskammer (11);
einen Wärmetauscher (23), der in der Verbrennungskammer (11) positioniert ist, wobei Wärmeenergie, die aus der Verbrennung des brennbaren Materials in der Verbrennungskammer (11) resultiert, zum Aufheizen von Wasser verwendet wird, das durch den Wärmetauscher (23) fließt;
eine Pumpe (27) zum Pumpen des Wassers durch den Wärmetauscher (23) hindurch, wobei ein Motor (40) der Pumpe (27) durch eine Steuervariable (30) angetrieben wird, die von der Steuerung (20) bereitgestellt wird; und
einen Temperatursensor (28) zum Messen der Temperatur des in dem Wärmetauscher (23) aufgeheizten Wassers, wobei der Temperatursensor (28) der Steuerung (22) ein Temperatursignal (29) bereitstellt;
wobei die Steuerung (20) ein Rückmeldesignal (31), das hinweisend zu einer Wasserflussrate ist, wobei die Wasserflussrate durch die Pumpe (27) bereitgestellt wird, und das von dem Temperatursensor (28) bereitgestellte Temperatursignal (29) verwendet, um zu ermitteln, ob die Wasserflussrate durch den Wärmetauscher (23) hindurch ausreichend oder unzureichend ist, wobei die Steuerung (20) die Verbrennung des brennbaren Materials zulässt, wenn die Wasserflussrate durch den Wärmetauscher (23) hindurch ausreicht, und die Verbrennung des brennbaren Materials verhindert, wenn die durch den Wärmetauscher (23) hindurch ermittelte Wasserflussrate unzureichend ist;
**dadurch gekennzeichnet, dass**
der Motor (40) der Pumpe (27) das Rückmeldesignal (31) bereitstellt, wobei das Rückmeldesignal (31) der Steuerung (22) Informationen, dass der Motor (40) der Pumpe (27) elektrische Leistung verbraucht, bereitstellt und hinweisend zu einer von der Pumpe (27) bereitgestellten Wasserflussrate ist;
die Steuerung (20) konfiguriert ist, um das Verfahren gemäß einem der Ansprüche 1 bis 6 in der Kesselvorrichtung (10) auszuführen.

## Revendications

1. Procédé de fonctionnement d'une chaudière (10), la chaudière (10) comprenant :
une chambre de combustion (11) pour brûler un combustible, en particulier pour brûler un mélange gaz/air à l'intérieur de la chambre de combustion (11) ;
un échangeur de chaleur (23) positionné à l'intérieur de la chambre de combustion (11), l'énergie thermique résultant de la combustion du combustible à l'intérieur de la chambre de combustion (11) étant utilisée pour chauffer de l'eau circulant à travers l'échangeur de chaleur (23) ;
une pompe (27) pour pomper l'eau à travers l'échangeur de chaleur (23), un moteur (40) de la pompe (27) étant commandé par une variable de contrôle (30) fournie par un contrôleur (20) ;
un capteur de température (28) pour mesurer la température de l'eau chauffée par l'échangeur de chaleur (23), le capteur de température (28) fournissant un signal de température (29) au contrôleur (22) ;
dans lequel un signal de retour (31) représentatif d'un débit d'eau, le débit d'eau étant fourni par la pompe (27), et le signal de température (29) fourni par le capteur de température (28) sont tous deux utilisés pour déterminer si le débit d'eau à travers l'échangeur de chaleur (23) est suffisant ou insuffisant, la combustion du combustible étant autorisée quand un débit d'eau suffisant est déterminé et la combustion du combustible n'étant pas autorisée quand un débit d'eau insuffisant est déterminé ;
**caractérisé en ce que**
le signal de retour (31) est fourni par le moteur (40) de la pompe (27), le signal de retour (31) fournissant l'information que le moteur (40) de la pompe (27) consomme de l'énergie électrique au contrôleur (22) et étant représentatif d'un débit d'eau fourni par la pompe (27) ;
lors d'une requête pour une demande de chaleur, le moteur (40) de la pompe (27) est démarré pour fournir le débit d'eau à travers l'échangeur de chaleur (23) ;
après que le moteur (40) de la pompe (27) a été démarré, le signal de retour (31) fourni par le moteur (40) de la pompe (27) est comparé à un premier seuil, l'allumage de la combustion n'étant lancé que si le signal de retour (31) fourni par le moteur (40) de la pompe (27) est supérieur au premier seuil ;
après que l'allumage de la combustion a été lancé, le signal de température (29) fourni par le capteur de température (28) est comparé à un deuxième seuil, la poursuite de la combustion n'étant autorisée que si le signal de température (29) fourni par le capteur de température (28) est supérieur au deuxième seuil.

2. Procédé selon la revendication 1, **caractérisé en ce que,** si le signal de retour (31) fourni par le moteur (40) de la pompe (27) est supérieur au premier seuil et si le signal de température (29) fourni par le capteur de température (28) est supérieur au deuxième seuil, alors une grandeur quantitative du débit d'eau pompé à travers l'échangeur de chaleur (23) est suffisante, à savoir assez élevée, pour autorise la poursuite de la combustion afin de répondre à la demande de chaleur.

3. Procédé selon la revendication 1 ou 2, **caractérisé en ce que,** pendant la combustion poursuivie, le signal de retour (31) fourni par le moteur (40) de la pompe (27) est comparé à un premier seuil.

4. Procédé selon une des revendications 1 à 3, **caractérisé en ce que** si, après que le moteur (40) de la pompe (27) a été démarré lors d'une requête pour une demande de chaleur, le signal de retour (31) fourni par le moteur (40) de la pompe (27) est inférieur au premier seuil, alors la vitesse du moteur (40) de la pompe (27) est augmentée, dans lequel
le signal de retour (31) fourni par le moteur (40) de la pompe (27) après l'augmentation de la vitesse de la pompe est comparé au premier seuil,
l'allumage de la combustion est autorisé si le signal de retour (31) fourni par le moteur (40) de la pompe (27) après l'augmentation de la vitesse de la pompe est supérieur au premier seuil,
la combustion est arrêtée et/ou la chaudière est transférée dans un mode alarme si le signal de retour (31) fourni par le moteur (40) de la pompe (27) après l'augmentation de la vitesse de la pompe est inférieur au premier seuil.

5. Procédé selon une des revendications 1 à 4, **caractérisé en ce que** si, après que l'allumage a été lancé, le signal de température (29) fourni par le capteur de température (28) est inférieur au deuxième seuil, alors le signal de retour (31) fourni par le moteur (40) de la pompe (27) est comparé au premier seuil, dans lequel
la combustion est poursuivie si le signal de retour (31) fourni par le moteur (40) de la pompe (27) est supérieur au premier seuil,
la combustion est arrêtée et/ou la chaudière est transférée dans un mode alarme si le signal de retour (31) fourni par le moteur (40) de la pompe (27) est inférieur au premier seuil.

6. Procédé selon une des revendications 1 à 5, **caractérisé en ce que**, si le signal de retour (31) fourni par le moteur (40) de la pompe (27) est inférieur au premier seuil et/ou si le signal de température (29) fourni par le capteur de température (28) est inférieur au deuxième seuil, alors une grandeur quantitative du débit d'eau pompé à travers l'échangeur de chaleur (23) est insuffisante, à savoir pas assez élevée, pour autoriser la combustion.

7. Contrôleur (20) destiné à faire fonctionner une chaudière (10), la chaudière (10) comprenant :
une chambre de combustion (11) pour brûler un combustible, en particulier pour brûler un mélange gaz/air à l'intérieur de la chambre de combustion (11) ;
un échangeur de chaleur (23) positionné à l'intérieur de la chambre de combustion (11), l'énergie thermique résultant de la combustion du combustible à l'intérieur de la chambre de combustion (11) étant utilisée pour chauffer de l'eau circulant à travers l'échangeur de chaleur (23) ;
une pompe (27) pour pomper l'eau à travers l'échangeur de chaleur (23), un moteur (40) de la pompe (27) étant commandé par une variable de contrôle (30) fournie par un contrôleur (20), et;
un capteur de température (28) pour mesurer la température de l'eau chauffée à l'intérieur de l'échangeur de chaleur (23), le capteur de température (28) fournissant un signal de température (29) au contrôleur (22) ;
le contrôleur (20) utilisant un signal de retour (31) représentatif d'un débit d'eau, le débit d'eau étant fourni par la pompe (27), et le signal de température (29) fourni par le capteur de température (28) pour déterminer si le débit d'eau à travers l'échangeur de chaleur (23) est suffisant ou insuffisant, le contrôleur (20) autorisant la combustion du combustible quand le débit d'eau déterminé à travers l'échangeur de chaleur (23) est suffisant et empêche la combustion du combustible quand le débit d'eau déterminé à travers l'échangeur de chaleur (23) est insuffisant ;
**caractérisé en ce que**
le moteur (40) de la pompe (27) fournit le signal de retour (31), le signal de retour (31) fournissant l'information que le moteur (40) de la pompe (27) consomme de l'énergie électrique au contrôleur (22) et étant représentatif d'un débit d'eau fourni par la pompe (27) ;
le contrôleur (20) est configuré pour exécuter le procédé de l'une quelconque des revendications 1 à 6 dans la chaudière (10).
